# EUROPÄISCHE PATENTSCHRIFT

(11) **EP 2 321 212 B1**
(45) Veröffentlichungstag und Bekanntmachung des Hinweises auf die Patenterteilung: **31.07.2013**
(21) Anmeldenummer: 09782021.1
(22) Anmeldetag: 20.08.2009
(51) Int. Cl.: B66B 13/30, B32B 17/10, B66B 11/02, E06B 3/46

(54) **AUFZUGSANLAGE MIT LEICHTGLASPLATTEN**
GLASS LIFT PLATE, A GLASS CABIN WALL AND GLASS LIFT DOORS
PLAQUE D'ASCENSEUR EN VERRE, PAROI EN VERRE DE CABINE ET PORTE D'ASCENSEUR EN VERRE

(30) Priorität: 02.09.2008 EP 08163516
(43) Veröffentlichungstag der Anmeldung: 18.05.2011
(73) Patentinhaber: Inventio AG, 6052 Hergiswil (CH)
(72) Erfinder: FRIED, Andreas, 14469 Potsdam (DE); SILBERHORN, Gert, CH-6402 Merlischachen (CH); GEISSHÜSLER, Michael, CH-6003 Luzern (CH); GREMAUD, Nicolas, CH-8820 Wädenswil (CH)
(74) Vertreter: Hirschberger, Petra
(86) Internationale Anmeldenummer: PCT/EP2009/060762
(87) Internationale Veröffentlichungsnummer: WO 2010/026050

(56) Entgegenhaltungen:
- EP-A- 1 878 864
- WO-A-2006/091308

## Beschreibung

Die Erfindung betrifft eine Aufzugsanlage mit einer Glasstruktur gemäss dem Oberbegriff des unabhängigen Patentanspruchs.

Die Aufzugsanlage besteht im Wesentlichen aus einer Kabine, welche über Tragmittel mit einem Gegengewicht verbunden ist. Mittels eines Antriebes, der wahlweise auf die Tragmittel, direkt auf die Kabine oder das Gegengewicht einwirkt, wird die Kabine entlang einer im Wesentlichen vertikalen Kabinenfahrbahn, entlang einer Schachtfrontwand verfahren. Die Kabinenfahrbahn ist in der Regel in einem Gebäude in einen Schacht integriert. Der Schacht ist durch mindestens eine Schachtfrontwand durch weitere Schachtwände, Schachtdecke und Schachtboden begrenzt. Die Schachtfrontwand, sowie bedarfsweise weitere Schachtwände, weisen Öffnungen auf durch welche der Schacht, beziehungsweise die im Schacht angeordnete Kabine betreten werden kann. Diese Schachtöffnungen sind mittels Schachttüren verschliessbar. Die Kabine ihrerseits weist Kabinentüren auf, welche den Zutritt zur Kabine fallweise im Zusammenspiel mit den Schachttüren freigeben oder schliessen. Die Kabinenfahrbahn kann auch lediglich an das Gebäude oder eine entsprechende Gebäudestruktur angebaut sein, wobei Teile der Schachtwände, Schachtdecke und Schachtboden entfallen, beziehungsweise durch nicht-feste Materialien definiert sein können. Die Glasstruktur ist als Teil der Kabine, als Teil der Kabinentüre sowie als Teil der Schachttüre verwendet.

Glasstrukturen sind bekannt. So zeigt EP 0665181 Glaselemente für Aufzüge, wobei die Glaselemente in Rahmen eingelegt werden und von diesen gehalten werden. Derartige Glaselemente sind schwer und die Rahmenkonstruktionen sind ebenfalls schwer und aufwändig herzustellen. In EP 0472845 sind Glaselemente dargestellt, welche mit Löchern versehen sind und welche, über diese Löcher, mit weiteren Bauteilen verbunden werden können. Diese Glaselemente sind weiterhin schwer und die Verwendung von Löchern oder Bohrungen in den Glasplatten bedingt aufwändige und ästhetisch unbefriedigende Anschlusselemente. Aus W02006/091308 sind weitere Glaselemente zur Verwendung in Gebäuden und Baustrukturen bekannt bei denen Einlegeteile in Randbereichszonen der Glaselemente eingelegt werden. Die Glasplatten sind Verbundplatten mit einer Zwischenfolie. Die Einlegeteile werden mittels Zwischenschichten auf eine Dicke des durch die Folie bestimmten Zwischenraumes abgeglichen. Kräfte welche auf das Einlegeteil wirken werden im Bereiche des Einlegeteils in die Glasplatten eingeleitet.

Es stellt sich nun die Aufgabe eine Aufzugsanlage mit verbesserten Glasstrukturen bereitzustellen, welche als tragende Bauteile verwendbar sind, welche insgesamt leichter sind und welche sich ästhetisch elegant und funktionsgerecht verarbeiten lassen.

Eine Aufzugsanlage mit einer Glasstruktur gemäss den Merkmalen von Anspruch 1, insbesondere für eine Aufzugsanlage mit einer Kabinenwand aus einer Glassstruktur gemäss Anspruch 6 oder für eine Aufzugsanlage mit einer Aufzugstüre aus einer Glassstruktur gemäss Anspruch 8 kann ästhetisch elegant und funktionsgerecht ausgeführt werden. Dabei beinhaltet die verwendete Glasstruktur eine erste und eine zweite Glasplatte. Eine Zwischenschicht verbindet die erste und die zweite Glassplatte miteinander und ein Anschlusselement ermöglicht ein Anschliessen der Glasstruktur an ein angrenzendes Bauteil. Das Anschlusselement ist in einem Randbereich der Glasstruktur mit einem Bereich in die Zwischenschicht eingebettet, wobei sich die Zwischenschicht auf Flächen zwischen dem Anschlusselement und den Glasplatten, bzw. in Räume zwischen dem Anschlusselement und den angrenzenden Glasplatten erstreckt. Ein Zwischenschichtmaterial kann in den Raum zwischen den Flächen des Anschlusselementes und den Flächen der Glasplatten eindringen und füllt diesen Raum im Wesentlichen einstückig aus. Im Wesentlichen einstückig bedeutet hierbei, dass das Zwischenschichtmaterial den Raum zwischen den Glasplatten und im Zwischenbereich zwischen den Anschlusselementen und den Glasplatten zusammenhängend ausfüllt, wobei jedoch durchaus im Material eingebettete Teile wie Designstrukturen oder Anzeigeelemente vorhanden sein können. Das Zwischenschichtmaterial verbindet das Anschlusselement mit den Glasplatten, wodurch Kräfte des Anschlusselementes in die Zwischenschicht, und damit grossflächig in die Glasstruktur eingeleitet werden können. Die Zwischenschicht ist entsprechend dick ausgeführt, da sie einen Zwischenraum einnimmt, welcher über die Dicke des Anschlusselementes hinausgeht.

Die Tragfähigkeit der Glasstruktur ist im Wesentlichen durch die von den Glassplatten übernommenen Zug und Druckkräfte bestimmt. Dies ist im Besonderen dann gegeben, wenn die Zwischenschicht den Zwischenraum voll ausfüllt, also die beiden Glasplatten zu einer gemeinsam tragenden Einheit verbindet.

Die Glasstruktur, welche nun aus einer relativ dicken einstückigen und im wesentlichen homogenen Zwischenschicht und zwei relativ dünnen Glasplatten besteht, ist im Vergleich zu einer herkömmlichen gleich dicken Glaswand leichter. Die Glasstruktur ist eine Leichtglasplatte. Dies hat einen positiven Effekt, da eine Kabine mit derartigem Wandmaterial leichter ist und dementsprechend weniger Transportenergie im Betrieb erfordert. Eine Türe mit einer derartigen Leichtglasplatte ermöglicht höhere Schliessgeschwindigkeiten, da bei gleicher Bewegungsenergie und kleinerem Gewicht höhere Bewegungsgeschwindigkeiten verwendet werden können.

Die Leichtglasplatte ist im Wesentlichen flächig, das heisst Längen- und Breitenabmessungen sind deutlich grösser als eine Dickenabmessung. Randbereiche der Leichtglasplatte sind den längs- und breitseitigen Begrenzungskanten entlang angeordnet, wobei beispielsweise eine rechteckige Leichtglasplatte vier derartige Randbereiche aufweist.

Vorteilhafterweise ist eine Dicke der Zwischenschicht grösser oder zumindest gleich einer halben Dicke der ersten oder der zweiten Glasplatte ausgeführt. Ein Gewicht einer entsprechend ausgeführten Leichtglasplatte wird, im Vergleich zu einem bekannten Sicherheitsglas, um etwa 10% reduziert. Bei einer Zwischenschichtdicke, welche in etwa gleich der Dicke einer der Glasplatten ist, reduziert sich das Gewicht um etwa 18%.

Die Gewichtsreduktion reduziert die benötigte Tragkraft und Antriebsenergie zum Betreiben einer Aufzugsanlage oder erlaubt die Erhöhung einer Schliessgeschwindigkeit einer Aufzugtüre, da bei derartigen Türen aus Sicherheitsgründen eine zulässige Schliessenergie definiert ist. Bei einer hohen Schliessgeschwindigkeit, was aus Gründen der Betriebseffizienz gewünscht ist, ergeben sich hohe kinetische Bewegungsenergien, was bei einem allfälligen Einklemmen von Personen jedoch unerwünscht ist. Bei leichten Glastüren wird die Bewegungsenergie entsprechend reduziert.

Vorteilhafterweise entspricht die Dicke der Zwischenschicht einer Materialdicke des Anschlusselementes im Randbereich der Leichtglasplatte zuzüglich einer 2-fachen Dicke der Restzwischenschicht, wobei die Dicke der Restzwischenschicht 0.5 mm bis 2.5 mm, vorteilhafterweise etwa 1.0 mm, beträgt. Eine Restzwischenschicht von min. 0.5 mm stellt sicher, dass eine Anschlusskraft vom Anschlusselement in die Zwischenschicht übertragen werden kann. Zudem ist ein Eindringen der Zwischenschicht in den Raum der Restzwischenschicht ermöglicht. Eine grössere Restzwischenschicht stellt eine gute flächige Verbindung dar und die Anordnung wird unempfindlich auf Planabweichungen des Anschlusselementes. Auf jeden Fall ist die Zwischenschicht aus einem im Gesamten homogenen Zwischenschichtmaterial aufgebaut, welches dementsprechend den gesamten Zwischenraum im Wesentlichen einstückig ausfüllt.

Vorteilhafterweise bildet die Leichtglasplatte im Wesentlichen eine rechteckige Fläche, wobei mindestens zwei aneinander angrenzende Randbereiche der Leichtglasplatte ein Anschlusselement beinhalten. Dabei ist mindestens eines der Anschlusselemente in einem Eckbereich der rechteckigen Fläche kraftschlüssig zum benachbarten Anschlusselement verbunden. Dies erhöht die Belastungsfähigkeit der Leichtglasplatte, insbesondere bei Anordnungen mit einem freien, unbefestigten Leichtglasplatten-Randbereich. Belastungskräfte auf diesen Randbereich werden dann nicht ausschliesslich über den Glasverbund in die befestigten oder gestützten Randbereiche weggeleitet, sondern sie werden zumindest teilweise auch über das Anschlusselement, welches im Eckbereich zum nächsten Anschlusselement verbunden ist, direkt zum gestützten oder befestigten Anschlusselement geleitet. Dies erhöht die Gesamtfestigkeit der Leichtglasplatte. Die Festigkeit von derartigen Leichtglasplatten wird üblicherweise mittels Pendelschlagversuch ermittelt. Hierbei wird eine Masse, welche über eine Pendelschnur aufgehängt ist, mit einer definierten Pendelauslenkung ausgelenkt und dann frei gegen die Leichtglasplatte prallen gelassen. Die beschriebenen Leichtglasplatten, insbesondere mit der ergänzenden Verbindung von Anschlusselementen in Eckbereichen, sind geeignet den geforderten Pendelmassen standzuhalten.

In einer konkreten Ausführung beinhalten drei der vier Randbereiche der Leichtglasplatte ein Anschlusselement und zwei der Anschlusselemente sind in Eckbereichen der rechteckigen Fläche kraftschlüssig zum benachbarten dritten Anschlusselement verbunden.

Vorteilhafterweise ist das Anschlusselement aus metallischem Werkstoff, vorzugsweise aus Aluminium, Stahl oder Messing hergestellt. Das Anschlusselement weist einen ersten Bereich auf, welcher in die Zwischenschicht eingebettet ist und das Anschlusselement weist einen weiteren Bereich auf, welcher zum Anschluss an das angrenzende Bauteil geeignet ist. Der erste Bereich weist vorteilhafterweise eine Struktur, vorzugsweise ein Lochmuster oder eine Oberflächenstruktur auf, welche eine gute Kraftverbindung zur Zwischenschicht ermöglicht und gewährleistet. Das Lochmuster kann nach ästhetischen Mustern ausgeführt sein, indem beispielsweise ein Lochanteil zum Platteninneren hin gross ist und in Richtung Randbereich abnimmt oder das Lochmuster kann ein Firmenlogo oder einen entsprechenden Schriftzug beinhalten. Vorteilhaft ist, dass einerseits ein metallischer Werkstoff geeignet ist um die erforderlichen Kräfte aufzunehmen und ein Anschlusselement aus metallischem Werkstoff kann mittels verschiedenen Herstellprozessen einfach hergestellt werden. Wunschgemäss kann dieses Anschlusselement beispielsweise mittels Biegen, Stanzen, Strangpressen oder Ziehen hergestellt werden. Die Gestaltung des ersten Bereiches des Anschlusselements ermöglicht hierbei eine gute und beständige Krafteinleitung vom Anschlusselement in die Leichtglasplatte.

Vorteilhafterweise sind die erste und die zweite Glasplatte im Randbereich mit einem Dichtmaterial versehen, welches ein Eindringen von Feuchtigkeit in die Zwischenschicht, beziehungsweise in die Grenzschicht zwischen Glassplatten und Zwischenschicht, verhindert. Derartige Dichtmaterialien sind beispielsweise elastoplastische diffusionsdichte Materialen, wie in der Fensterindustrie verwendet.

Vorteilhafterweise verbindet die Zwischenschicht die erste und die zweite Glasplatte im Wesentlichen schubfest miteinander. Diese Zwischenschicht ist aus transparentem Material, vorzugsweise einem Kunststoff, beispielsweise einem Acrylharz, hergestellt. Die Zwischenschicht ist aus giessfähigem Material. Damit ergibt sich im ausgehärteten Zustand der Zwischenschicht eine tragfähige belastbare Schicht, welche die beiden Glasplatten zugleich schubfest miteinander verbindet. Durch eine geeignete Wahl der Oberflächenstruktur von Innenseiten der Glasplatten kann die Schubkraftübertragung zusätzlich entsprechend optimiert werden. Die Zwischenschicht ist hierbei leicht und weist eine hohe Elastizität auf. Die Glasplatten bilden die Deckschichten mit den bekannten glasspezifischen Oberflächeneigenschaften, im besonderen einer Kratzbeständigkeit. Ein derartig geformtes Glassandwich ist tragfähig, leicht und verschleissfest.

Vorteilhafterweise ist die Zwischenschicht mit einer Einlage versehen. Die Einlage ergibt einen optisch sichtbaren Effekt. Die Leichtglasplatte kann damit als gestalterisches Bauelement verwendet werden. Die Einlage kann auch als Oberflächenschicht, beispielsweise in Form eines Siebdrucks, auf eine oder beide Glasplatten aufgetragen sein. Vorteilhafterweise ist diese Schicht direkt auf eine der Zwischenschicht zugewandte Seite der Glasplatte aufgebracht. Die Beschichtung, beziehungsweise die Einlage, ist somit geschützt und in einer vorteilhaften Zusammenwirkung von zwei oder mehreren Schichten kann ein dreidimensionaler Effekt erzielt werden. Die Oberflächenschicht kann auch durch Ätzung oder mittels Schleifen oder Ritzen der Oberflächen erzeugt sein.

Vorteilhafterweise beinhaltet die Einlage wahlweise ein Bild, eine Lichtskulptur, eine flächig schaltbare Leuchte und/oder einen Strahlungsfilter. Ein Aufzug bildet eine Visitenkarte eines Gebäudes. Ein in die Zwischenschicht eingelegtes Lichtbild oder Mosaik kann die Aufmerksamkeit von Benutzern erwecken. Ein Strahlungsfilter kann beispielsweise Sonnenlicht filtern und unverträgliche UV-Strahlen mindern. Eine LCD-folie kann auch in die Zwischenschicht eingelegt werden, wodurch sich Möglichkeiten der Kommunikationstechnik eröffnen. Es können Informationen dargestellt oder generiert werden. Unter Verwendung einer interaktiven Folie, welche beispielsweise auf Druck, Licht oder kapazitive Änderungen anspricht, kann auch eine Kommunikations-Leichtglasplatte definiert werden, welche Funktionen einer Aufzugsbedieneinheit übernehmen kann.

Vorteilhafterweise ist eine der Oberflächen der Leichtglasplatte mit einer schmutzabweisenden Beschichtung, beispielsweise einer Nanobeschichtung, versehen. Damit wird Reinigungsaufwand reduziert.

Weitere vorteilhafte Ausgestaltungen der Anschlusselemente und der Randzonen der Leichtglasplatte sind auch in den Detailbeschreibungen, im Zusammenhang mit den Figuren, erläutert.

Vorteilhafterweise sind beispielsweise Randbereiche oder Teile der Randbereiche der Leichtglasplatte mit Sicht- und Lichtschutzbeschichtungen versehen, um eine Sicht auf die in die Zwischenschicht eingelegten Anschlusselemente zu beschränken. Derartige Beschichtungen sind auch geeignet Randbereiche und Kanten von Zwischenschichtübergängen vor Lichtstrahlen zu schützen. Derartige Ausgestaltungen sind vorteilhafterweise mit dem optischen Erscheinungsbild der Leichtglasplatte, wie vorgängig dargestellt, kombiniert.

In einer vorteilhaften Anwendung sind Kabinenwände mit einer oder mehreren Leichtglasplatten, wie im Rahmen dieser Beschreibung erläutert, zusammengebaut. Derartige Kabinenwände sind im Vergleich zu konventionellen Glas- oder Panoramakabinen leicht und sie ermöglichen einen grossen gestalterischen Freiraum für Aufzugsbauer und Architekten.

Vorteilhafterweise sind die Kabinenwände im Wesentlichen vollflächig aus der Leichtglasplatte hergestellt. Dadurch entfallen aufwändige Rahmenkonstruktionen. Alternativ bestehen lediglich Teilbereiche der Kabinenwand aus der Leichtglasplatte. Dies ermöglicht beispielsweise Seitenbereiche mit undurchsichtigen Materialien, wie Stahlblech, auszuführen und eine Rückwand aus Glas auszuführen. Wünsche von Architekten können einfach erfüllt werden.

Vorteilhafterweise ist die Leichtglasplatte in einer ersten Anwendung als seitliche Kabinenabgrenzung verwendet. Sie ist jedoch ebenso als obere Kabinendecke oder auch als Kabinenboden verwendbar. Allerdings sind bei der Verwendung der Leichtglasplatte als Kabinendecke oder noch mehr als Kabinenboden spezifische menschliche Ängste und Reaktionen zu berücksichtigen. Im Besonderen bei der Verwendung als Boden kann es als unangenehm empfunden werden von einem Gebäudeboden auf eine transparente Plattform zu treten. So ist bei dieser Ausführung empfohlen, die Leichtglasplatte intransparent zu gestalten. Kabinenwände und Kabinedecken aus derartigen Leichtglasplatten haben jedoch auch den Vorteil, dass eine Umgebungsbeleuchtung zugleich als Kabinenbeleuchtung verwendet werden kann, oder dass Vandalismus vorgebeugt wird, da das Kabineninnere von aussen beobachtet werden kann.

Vorteilhafterweise sind die Leichtglasplatten selbst als tragende Struktur der Aufzugskabine verwendet. Sie übernehmen hierbei wesentliche Kräfte, wie Querschub-, Zug- und Druckkräfte. Querschubkräfte ergeben sich beispielsweise bei unsymmetrischen Beladungen der Aufzugskabine, wenn seitliche Führungs- und Stützkräfte über die Struktur der Aufzugskabine vom Kabinenboden in obere Kabinenführungsteile geleitet werden.

In einer weiteren vorteilhaften Anwendung sind Aufzugstüren mit einer oder mehreren Leichtglasplatten, wie im Rahmen dieser Beschreibung erläutert, zusammengebaut. Aufzugstüren werden in der Regel mittels Antriebseinheiten bewegt, beziehungsweise bedarfsgemäss geöffnet und wieder geschlossen. Diese Bewegungen sollen schnellstmöglich erfolgen, um Bedienzeiten möglichst effizient zu gestalten. Andererseits muss eine Geschwindigkeit und dabei in erster Linie die Geschwindigkeit beim Schliessen der Türen so gewählt werden, dass die Türe bei Detektion eines Hindernisses oder bei einem Aufprall auf ein Hindernis keine unzulässige Belastungen im Hindernis erzeugt. Dies ist vor allem bei Personenaufzügen wichtig, wo das Hindernis eine Person sein kann. Schwere Türen können dementsprechend nur langsam bewegt werden. Die dargestellten Aufzugtüren beinhalten eine Leichtglasplatte, welche leicht ist und welche auf schwere Rahmenbauteile verzichten kann. Die derart ausgeführte Türe ist gesamthaft leicht und sie kann entsprechend schnell bewegt werden. Glastüren haben zudem den Vorteil, dass Personen, welche eine Aufzugskabine betreten wollen, bereits beim Herannahen des Aufzuges feststellen, ob beispielsweise eine Person die Kabine verlassen will. Zeitblokierendes Abstimmen der Personen untereinander, beispielsweise beim Öffnen der Türe, entfällt deswegen.

Vorteilhafterweise sind sowohl Kabinentüre und Schachttüre mittels derartigen Leichtglasplatten gebaut. Allerdings sind auch Gebäude möglich, bei denen lediglich ausgewählte Etagen mit Glastüren versehen sind. So sind vorteilhafterweise Etagen mit hoher Vertraulichkeit mit intransparenten Türen herkömmlicher Art versehen. Selbstverständlich können derartige Etagen auch mit Leichtglasplatten, jedoch mit intransparenter Zwischenschicht oder entsprechender Bedruckung versehen sein.

Vorteilhafterweise ist ein oberes Anschlusselement der Leichtglasplatte derart ausgeführt, dass Funktionsteile, wie beispielsweise Türrollen oder Schliessriegel, an der Leichtglasplatte befestigt werden können. Das obere Anschlusselement ist dementsprechend mit dem ersten Bereich in der von der Leichtglasplatte gebildeten Zwischenschicht verankert und das weitere Ende des oberen Anschlusselementes beinhaltet direkt Funktionsteile der Türaufhängung und Verriegelung. In einer alternativen Ausführung sind die Funktionsteile der Türaufhängung indirekt über eine, vorzugsweise lösbare Trägerplatte zum oberen Anschlusselement verbunden. Dies ermöglicht die Bereitstellung von Türen mit wenigen, einfach austauschbaren Baugruppen.

Vorteilhafterweise sind die Anschlusselemente der Leichtglasplatte bedarfsgerecht geformt. So schliesst beispielsweise ein vorderes Anschlusselement die Aufzugstüre im vorderen, beziehungsweise im Schliessbereich elegant über die Dicke des Glases ab oder es umfasst allenfalls die Leichtglasplatte. Der Architekt kann die Gestaltung des Abschlusses optisch und funktionell gestalten. Vorteilhaft ist, wenn dieses vordere Anschlusselement mit runder Kante versehen ist, um Verletzungen von berührten Gegenständen und Personen vorzubeugen.

Vorteilhafterweise beinhaltet das Anschlusselement, vorzugsweise das vordere, schliessseitige Anschlusselement, einen Sensor zur Erfassung von Gegenständen im Bereich der vorderen Kante der Aufzugstüre, beziehungsweise dessen Aufzugtürblattes. Dieser Sensor detektiert den Gegenstand beispielsweise mittels Kraftmessung, Induktiv, Kapazitiv oder mittels Messung von Schall- oder Lichtwellen. Eine Überwachung einer Schliesszone der Aufzugtüre ist damit einfach und ästhetisch ansprechend machbar. Ergänzend oder alternativ kann das vordere Anschlusselement mit Warnelementen, wie Blinkleuchten versehen sein um einen Benutzer bei schliessender Türe zu warnen.

Vorteilhafterweise ist ein hinteres Anschlusselement, dessen erster Bereich in die Zwischenschicht der Leichtglasplatte eingebettet ist, derart ausgeführt, dass ein weiterer Bereich mindestens einseitig die Dicke der Leichtglasplatte überragt. Dadurch kann ein Spalt zwischen der Leichtglasplatte und einem benachbarten Türblatt oder einem benachbarten Türrahmen zumindest optisch geschlossen werden. Vorschriften betreffend Spaltabmessungen bei bewegten Türen, wie beispielsweise die Aufzugsnorm EN81-1, können damit bedarfsgerecht erfüllt werden.

Vorteilhafterweise beinhaltet die als Aufzugtüre verwendete Leichtglasplatte ein unteres Anschlusselement dessen weiterer Bereich mit Führungselementen zum Führen der Leichtglasplatte in einem Führungsprofil verwendet ist. Alternativ kann auch die Leichtglasplatte direkt, in deren unterem Bereich, mit Gleitführungselementen zum Führen der Leichtglasplatte in einem Führungsprofil versehen sein.

Vorteilhafterweise ist das vordere und das hintere Anschlusselement kraftschlüssig mindestens mit dem oberen Anschlusselement oder mit dem oberen und dem unteren Anschlusselement verbunden. Belastungen auf das Türfeld werden somit nicht alleine über den Glasverbund in die obere, beziehungsweise die untere Befestigung eingeleitet, sondern sie werden auch über die Anschlusselemente direkt weggeleitet.

Weitere vorteilhafte Ausführungen sind in den abhängigen Ansprüchen sowie in den Ausführungsbeispielen beschrieben.

Im Folgenden wird die Erfindung anhand von Ausführungsbeispielen im Zusammenhang mit den schematischen Figuren näher erläutert.

Es zeigen:
- **Fig. 1**: eine Gesamtansicht eines Aufzuges,
- **Fig. 2**: eine perspektivische Ansicht einer Leichtglasplatte,
- **Fig. 3**: eine Frontansicht einer Leichtglasplatte,
- **Fig. 4**: ein erstes Beispiel eines oberen Anschlusselementes,
- **Fig. 5**: ein zweites Beispiel eines oberen Anschlusselementes,
- **Fig. 6**: ein drittes Beispiel eines oberen Anschlusselementes,
- **Fig. 7**: ein erstes Beispiel eines vorderen Anschlusselementes,
- **Fig. 8**: ein zweites Beispiel eines vorderen Anschlusselementes,
- **Fig. 9**: ein erstes Beispiel eines hinteren Anschlusselementes,
- **Fig. 10**: ein zweites Beispiel eines hinteren Anschlusselementes,
- **Fig. 11**: ein erstes Beispiel eines unteren Anschlusselementes,
- **Fig. 12**: ein zweites Beispiel eines unteren Anschlusselementes,
- **Fig. 13**: eine Ansicht einer Aufzugskabine,
- **Fig. 14**: ein Beispiel einer Eckverbindung von Leichtglasplatten,
- **Fig. 15**: ein Beispiel einer Flachverbindung von Leichtglasplatten,
- **Fig. 16**: ein Beispiel einer bedruckten Leichtglasplatte und
- **Fig. 17**: ein Beispiel einer kraftschlüssigen Eckverbindung.

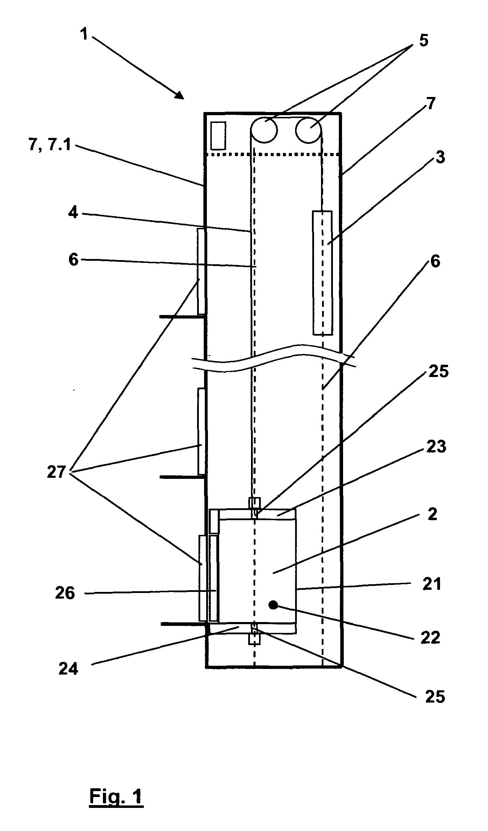

Eine mögliche Gesamtanordnung eines Aufzuges ist in der Fig. 1 dargestellt. Der Aufzug 1, bzw. die Aufzugsanlage beinhaltet zumindest eine Aufzugskabine 2, einen Antrieb 5, ein Gegengewicht 3 und im Weiteren Tragmittel 4. Der Antrieb 5 treibt die Tragmittel 4 und bewegt damit die Aufzugskabine 2 und das Gegengewicht 3 gegengleich. Die Kabine 2 ist gestaltet um Personen und/oder Güter aufzunehmen und zwischen Etagen eines Gebäudes zu transportieren. Kabine 2 und Gegengewicht 3 sind mittels Führungen 6 geführt. Der Aufzug ist in einen Schacht eingebaut, wobei der Schacht im Wesentlichen durch den Fahrraum bestimmt wird der seinerseits durch eine Fahrstrecke von Kabine 2 und Gegengewicht 3 bestimmt ist. Darin eingeschlossen sind allfällige Sicherheitsräume und Distanzen.

Der Schacht ist durch Schachtwände 7 begrenzt. Diese Schachtwände 7 können bedarfsweise teilweise oder gesamthaft aus erfindungsgemässen Leichtglasplatten, aus anderen Baustoffen oder aus Mischungen von beliebigen Baustoffen und Leichtglasplatten ausgeführt sein. Der Schacht verfügt über eine etagenseitige Schachtwand 7.1. Diese etagenseitige Schachtwand 7.1 beinhaltet Aufzugstüren, beziehungsweise Schachttüren 27. Diese Schachttüren 27 ermöglichen einen Zutritt zum Innern des Schachtes zum Besteigen der Kabine 2.

Die Kabine 2 ist mittels Führungsmitteln 25 entlang einer Führungsschiene 6 geführt. Die Führungsmittel 25 übernehmen seitliche Führungskräfte, welche sich beispielsweise aus einer unsymmetrisch gehängten oder einer unsymmetrisch beladenen Kabine ergeben.

Weiter beinhaltet die Kabine 2 ebenfalls eine Aufzugstüre, beziehungsweise eine Kabinentüre 26. Die Kabinentüre 26 sperrt beziehungsweise öffnet, im Zusammenspiel mit der entsprechenden Schachttüre 27, bedarfsweise den Zugang zur Kabine 2.

Die Kabine 2 besteht im Wesentlichen aus Kabinenwänden, welche den Transportraum umschliessen. Die Kabinenwände beinhalten einen Kabinenboden 24, Seitenwänden 22, Rückwand 21 und natürlich die frontseitige Kabinentüre 26, welche in eine Frontwand der Kabine 2 integriert ist.

Bei Verwendung von Schachtwänden 7 aus Leichtglasplatten, sind vorzugsweise auch wesentliche Teile der Kabine aus Leichtglasplatten zusammengebaut, und bei Verwendung von Schachttüren aus Leichtglasplatten sind vorteilhafterweise auch die Kabinentüren aus Leichtglasplatten zusammengestellt.

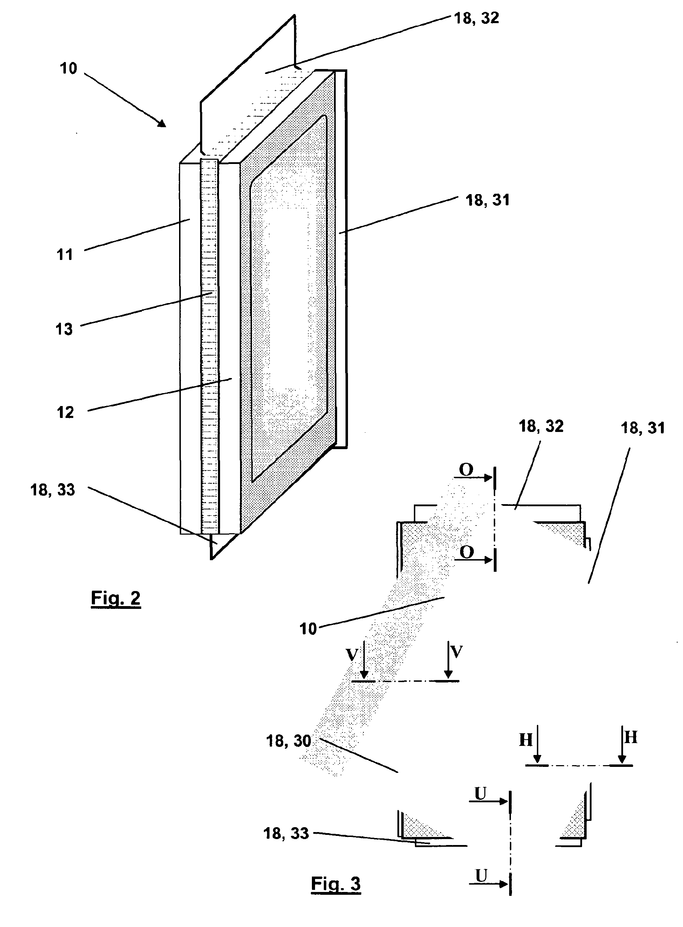

Eine derartige Leichtglasplatte 10 besteht, wie in den Figuren 2 und 3 dargestellt, aus einer ersten Glasplatte 11 und einer zweiten Glasplatte 12. Eine Zwischenschicht 13 aus Giessharz, vorzugsweise Acrylharz, füllt den Zwischenraum zwischen den zwei Glasplatten 11, 12 im Wesentlichen einstückig aus. Die Zwischenschicht 13 verbindet die zwei Glasplatten 11, 12 im Wesentlichen schubfest miteinander. In Randbereichen der Glasplatten 11, 12 sind Anschlusselemente 18 in die Zwischenschicht 13 eingelegt. Das Zwischenschichtmaterial dringt auch in den Bereich zwischen Anschlusselement 18 und Glasplatten 11,12 ein und verbindet das Anschlusselement 18 mittels der Zwischenschicht 13 zu den Glassplatten 11,12. Die Anschlusselemente 18 sind entsprechend von Schnittstellenanforderungen, wie in den nachstehenden Beispielen ersichtlich, ausgeführt.

Im Beispiel ist ein erstes Anschlusselement 18 als oberes Anschlusselement 32 ausgeführt und ein anderes Anschlusselement 18 ist als hinteres Anschlusselement 31 ausgeführt. Das obere Anschlusselement 32 kann beispielsweise mit einer Abkröpfung versehen sein, und das hintere Anschlusselement 31 kann mit einem freien Schenkel, der die zweite Glasplatte 12 seitlich überragt, versehen sein.

Ein weiteres Anschlusselement 18 ist als unteres Anschlusselement 33 ausgeführt und ein viertes Anschlusselement 18 ist als vorderes Anschlusselement 30 ausgeführt. Das untere Anschlusselement 33 kann flach ausgeführt sein und das vordere Anschlusselement 30 kann beispielsweise mit einem Türkantenschutz versehen sein.

Die Formen können zweckentsprechend definiert sein, wobei auch symmetrische Ausführungen möglich sind. Bei symmetrischen Ausführungen sind beispielsweise das untere und das obere oder auch alle Anschlusselemente gleich ausgeführt.

Die in den Figuren 2 und 3 gezeigte zweite Glasplatte 12 ist im Randbereich der Leichtglasplatte bedruckt. Die Bedruckung verhindert den Einblick auf die Anschlusselemente und sie schützt auch den Randbereich der Leichtglasplatte vor schädlichen Strahlungen.

Fig. 3 stellt eine Ansicht der Leichtglasplatte 10 von Fig. 2 dar. Mit Schnittbezeichnungen O - O, V - V, H - H, und U - U ist auf die folgenden Detaildarstellungen verwiesen. Die Definition von oberen, hinteren, vorderen und unteren Anschlusselementen ist beispielhaft. So können alle dargestellten Anschlusselemente je nach Anforderung angrenzender Teile an allen Orten eingesetzt werden.

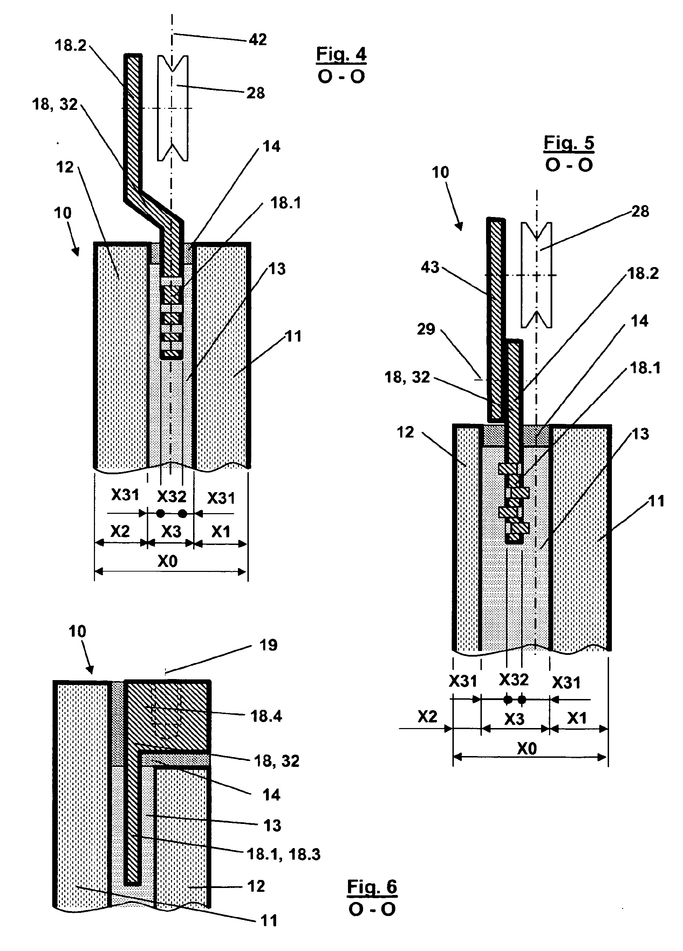

Fig. 4 zeigt in einer Schnittdarstellung O-O eine erste Ausführungsvariante des Anschlusselementes 18 als oberes Anschlusselement 32, wie es in der Leichtglasplatte 10 von Fig. 3 verwendbar ist. Das obere Anschlusselement 32 beinhaltet einen ersten Bereich 18.1 der in die Zwischenschicht 13 eingebettet ist. Dieser erste Bereich 18.1 wird beispielsweise vor dem Einfüllen des Giessharzes der Zwischenschicht 13 im Zwischenraum positioniert. Im Beispiel ist zudem am Rand der Leichtglasplatte 10 ein Dichtmaterial 14 eingefügt, welches zugleich das obere Anschlusselement 32 fixiert und positioniert. Das Dichtmaterial 14 schützt die Kanten der Zwischenschicht 13 und verhindert ein Eindringen von Feuchtigkeit in die Zwischenschicht 13, beziehungsweise in den Grenzbereich zwischen Zwischenschicht und Glassplatten 11, 12.

Die Zwischenschicht 13, beziehungsweise der Abstand zwischen den zwei Glassplatten 11, 12, ist derart bemessen, dass das Zwischenschichtmaterial in den Raum beziehungsweise eine Restzwischenschicht X31 zwischen dem ersten Bereich 18.1 des oberen Anschlusselementes 32 und den beiden Glasplatten 11, 12 eindringen kann. Die Zwischenschicht 13 kann sich auf Flächen zwischen dem oberen Anschlusselement 32 und den Glasplatten 11,12 erstrecken. Die Restzwischenschicht X31 hat eine Dicke von mindestens etwa 0.5 mm. Damit kann eine gute Flächendeckung erzielt werden. In der Praxis wird eine Dicke der Restzwischenschicht X31 von etwa 1.0 mm angestrebt. Dadurch können Ungenauigkeiten des oberen Anschlusselementes 32 aufgefangen werden.

Bei dem in Fig. 4 gezeigten oberen Anschlusselement 32 ist der erste Bereich mit einer Lochung versehen. Das Giessharz der Zwischenschicht 13 füllt diese Lochungen aus und verbessert die Kraftübertragung vom oberen Anschlusselement 32 in die Leichtglasplatte 10. Die Lochungsdichte nimmt dabei in Richtung des Glasrandes ab. Dies ergibt einen optisch gefälligen Übergang vom vollständig transparenten Bereich in die intransparente Anschlusszone und ein Kraftaufbau im oberen Anschlusselement 32 findet kontinuierlich statt.

Im Beispiel gemäss Fig. 4 beträgt eine Zwischenschichtdicke X3 der Zwischenschicht 13 in etwa 75% der Glassplattendicke X1, X2 einer der Glasplatte 11, 12. Die beiden Glasplatten 11, 12 sind gleich dick gewählt und die Restzwischensicht X31 zwischen der Glasplatte 11, 12 und dem oberen Anschlusselement 32 beträgt in etwa 50% einer Materialdicke X32 des oberen Anschlusselementes 32. Eine typische Materialdicke X32 des Anschlusselementes 32 beträgt 1.5 mm. Die Zwischenschichtdicke X3 der Zwischenschicht 13 im Beispiel beträgt somit etwa 3.0 mm. Eine Glasplattendicke X1, X2 der einzelnen Glasplatten 11, 12 beträgt etwa 4.0 mm. Damit resultiert eine Gesamtdicke S der Leichtglasplatte 10 von etwa 11.0 mm.

Das obere Anschlusselement 32 ist mit Tragrollen 28 versehen. Diese Leichtglasplatte 10 ist als Aufzugtüre verwendet und die Rollen 28 ermöglichen ein seitliches verschieben der Aufzugtüre entlang einer Rollenbahn. Die Tragrollen 28 sind vorzugsweise entsprechend einer Schwerpunktslinie 42 der Leichtglasplatte 10 angeordnet und der Aufzugtürflügel ist somit symmetrisch aufgehängt. Das obere Anschlusselement 32 ist einteilig hergestellt. Die Tragrollen 28 werden direkt an dieses obere Anschlusselement 32 befestigt.

Die in Fig. 4 am Beispiel des oberen Anschlusselementes 32 dargestellten Lösungen sind prinzipiell für alle Anschlusselemente 18 anwendbar. Die einzelnen Bereiche, wie Ausführung des ersten Bereiches 18.1 mit Lochungen, Abmessungen und Abmessungsverhältnisse, Verwendung eines Dichtmaterials 14, u.s.w. sind mit den Lösungen der folgenden Beispiele austauschbar oder kombinierbar.

Fig. 5 zeigt in einer weitern Schnittdarstellung O-O eine andere Ausführungsvariante des Anschlusselementes 18 als oberes Anschlusselement 32, wie es in der Leichtglasplatte 10 von Fig. 3 verwendbar ist. Der Aufbau der Leichtglasplatte 10 entspricht im Wesentlichen dem Aufbau wie in Fig. 4 erläutert. Im Unterschied dazu ist das obere Anschlusselement 32 mehrteilig ausgeführt. Eine Support- oder Trägerplatte 43, welche ihrerseits weitere Elemente, wie Türrollen 28, enthalten kann, ist mittels lösbaren Verbindungen 29, beispielsweise Schrauben, am oberen Anschlusselement 32 befestigt. Das obere Anschlusselement 32 ist wiederum mit seinem ersten Bereich 18.1 in der Zwischenschicht 13 der Leichtglasplatte 10 verankert.

In einem weiteren Unterschied sind, anstelle der Lochungen im Beispiel gemäss Fig. 4, Andrückungen im ersten Bereich 18.1 vorgesehen. Diese Andrückungen bilden auf einer Seite des Materials Erhebungen und auf der anderen Seite des Materials entsprechende Vertiefungen. Damit lässt sich ein guter Kraftübergang von der Zwischenschicht 13 zum oberen Anschlusselement 32 erreichen.

In einem weiteren Unterschied sind die Glasplatten 11, 12 asymmetrisch ausgeführt. Eine Glasplattendicke X2 der zweiten Glasplatte 12 ist, im Vergleich zur Glasplattendicke X1 der ersten Glasplatte 11, dünner, beispielsweise halb so dick, ausgeführt. Die Zwischenschichtdicke X3 der Zwischenschicht 13 entspricht in etwa der Glasplattendicke X1 der ersten Glasplatte 11. Um eine genügende Überdeckung der Erhebungen im ersten Bereich 18.1 des oberen Anschlusselementes 32 zu gewährleisten, ist die Zwischenschicht 13 so bemessen, dass sich eine genügende Restzwischensicht X31 ergibt.

Vorteilhafterweise ist die stärkere erste Glasplatte 11 einer höher belasteten Seite der Leichtglasplatte 10 zugewandt.

Auch die einzelnen Lösungen gemäss Fig. 5 sind Beispiele und sie sind mit den Lösungen der vorgängig und der folgenden Beispiele austauschbar oder kombinierbar.

Fig. 6 zeigt in einer weitem Schnittdarstellung O-O eine weitere Ausführungsvariante des Anschlusselementes 18 als oberes Anschlusselement 32, beziehungsweise einer entsprechenden Leichtglasplatte 10. Hierbei ist die zweite Glasplatte 12 zur ersten Glassplatte 11, zumindest in einem der Randbereiche zurückgesetzt angeordnet und das obere Anschlusselement 32 weist einen Schenkel 18.1, 18.3 auf, welcher in die Zwischenschicht 13 hineinragt und das obere Anschlusselement 32 beinhaltet weiter einen Kopfteil 18.4. Der Kopfteil 18.4 füllt den Platz, der durch die zurückgesetzte zweite Glasplatte 12 entsteht im Wesentlichen aus. Der Kopfteil 18.4 beinhaltet vorzugsweise Elemente, wie ein Gewinde 19, zum Anschliessen von weiteren Teilen. Diese Ausführung ermöglicht besonders ästhetische Anordnungen von Leichtglasplatten 10. An diesem Kopfteil 18.4 kann beispielsweise eine Support- oder Trägerplatte 43, wie in Fig. 5 dargestellt, angefügt werden.

Auch die einzelnen Lösungen gemäss Fig. 5 sind Beispiele und sie sind mit den Lösungen der vorgängig und der folgenden Beispiele austauschbar oder kombinierbar.

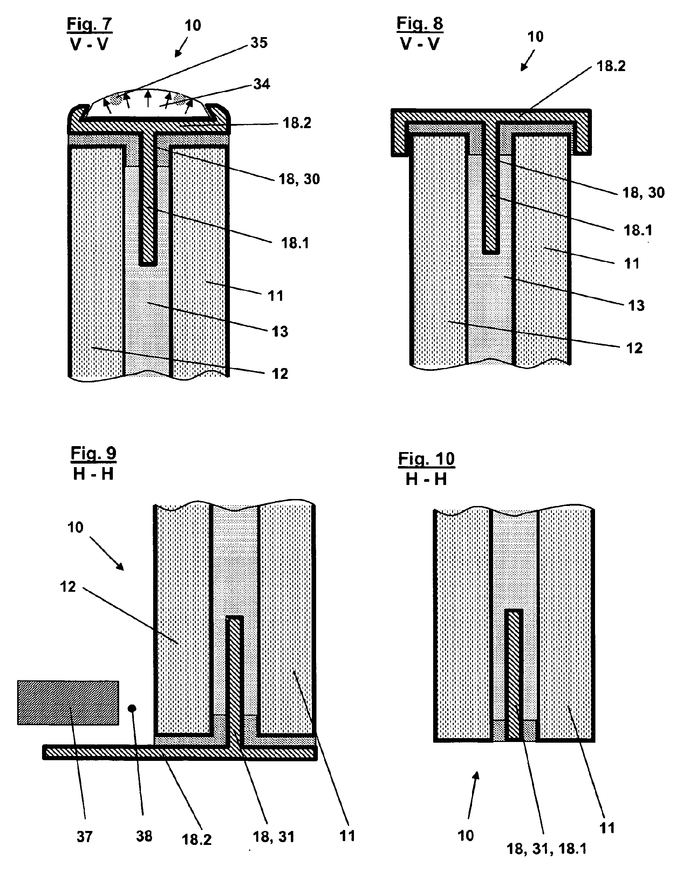

Fig. 7 zeigt in einer Schnittdarstellung V-V eine mögliche Ausführungsvariante des Anschlusselementes 18 als vorderes Anschlusselement 30, wie es vorteilhafterweise bei einer Aufzugstüre verwendbar ist. Dieses vordere Anschlusselement 30 beinhaltet wiederum einen ersten Bereich 18.1 der, wie vorgängig anhand des oberen Anschlusselementes erläutert, in die Zwischenschicht 13 eingebettet ist.

Das vordere Anschlusselement 30 beinhaltet einen weiteren Bereich 18.2, welcher sich über die Gesamtdicke der Leichtglasplatte 10 erstreckt und welcher eine entsprechende Kante der Leichtglasplatte 10 abdeckt. Dieser weitere Bereich 18.2 beinhaltet auf der der Leichtglasplatte 10 abgewandter Seite eine Halterung, beispielsweise in Form eines Schwalbenschwanzes. In diese Halterung können Zusatzelemente oder Verbindungselemente zu weiteren Bauteilen befestigt werden. Ein derartiges Zusatzelement ist beispielsweise ein Türkantenschutz in Form einer Gummileiste oder einer Bürstenstruktur.

In einer Ausführung ist dieses Zusatzelement eine Sensorleiste 34. Diese Sensorleiste 34 beinhaltet eine Sensorik zur Feststellung von Hindernissen im Türbereich. Hindernisse können dabei über Kraftdetektoren, Infrarotaufnehmer, Ultraschalldetektoren, Induktionsfeldsensoren, kapazitive Messsysteme, Fotozellen oder Lichtgittersensoren festgestellt werden. Die Sensorleiste 34 kommuniziert mit einer entsprechenden Türsteuerung, welche die Aufzugstüre steuert. Alternativ oder ergänzend kann das Zusatzelement auch einen Warngeber 35 beinhalten. Dies kann beispielsweise eine Warnleuchte sein, welche beim Schliessen leuchtet oder blinkt. Der Warngeber 35 kann auch Vibrationselemente beinhalten, welche beim sanften Zudrücken, wenn beispielsweise eine Türe von einem Benutzer blockiert wird, vibriert. Auch Summer oder Tonelemente können in dieses Zusatzelement integriert werden.

In einer weiteren ergänzenden oder alternativen Ausführung können Lichtelemente auch in die Zwischenschicht 13 eingebettet werden. So können ganze Leichtglasplattenflächen, beispielsweise beim Schliessen, in einem Farbton leuchten oder blinken.

Auch bei diesen Ausführungen des vorderen Anschlusselementes 30 handelt es sich um Beispiele und sie sind mit den Lösungen der vorgängig und der folgenden Beispiele austauschbar oder kombinierbar.

Fig. 8 zeigt eine weitere mögliche Ausführungsvariante des Anschlusselementes 18 als vorderes Anschlusselement 30. Dieses vordere Anschlusselement 30 beinhaltet wiederum einen ersten Bereich 18.1 der, wie bereits erläutert, in die Zwischenschicht 13 eingebettet ist. Das vordere Anschlusselement 30 beinhaltet den weiteren Bereich 18.2, welcher sich in diesem Ausführungsbeispiel über die Gesamtdicke der Leichtglasplatte 10 erstreckt und welcher die entsprechende Kante der Leichtglasplatte 10 umfasst. Kanten der Leichtglasplatte 10 sind hierbei vollumfänglich geschützt.

Fig. 9 zeigt in einer Schnittdarstellung H-H eine Ausführungsvariante des Anschlusselementes 18 als hinteres Anschlusselement 31, wie es beispielsweise bei einer Aufzugstüre verwendbar ist. Das Anschlusselement 31 beinhaltet wiederum den ersten Bereich 18.1 der, wie bereits in mehreren Varianten erläutert, in die Zwischenschicht 13 eingebettet ist. Der weitere Bereich 18.2 erstreckt sich nun auf einer Seite der Leichtglasplatte 10 bis zum Rand der Glasplatte 11. Ein gegenüberliegendes Ende des weiteren Bereichs 18.2 ragt über die Leichtglasplatte, beziehungsweise die Glasplatte 12 hinaus. Dieser hinausragende Teil überdeckt beispielsweise einen Spalt 38 der zwischen einer gebäudeseitigen Wand 37 und der Leichtglasplatte 10 entsteht. Ein Eindringen von Luft oder Wind kann dadurch vermindert oder bei Benutzung entsprechender Dichtlippen (nicht dargestellt) sogar verhindert werden. Dies ist vor allem bei Aufzügen mit einem offenen Schacht, d.h. wenn Schachtwände 7 teilweise fehlen, sinnvoll.

Fig. 10 zeigt eine Ausführungsvariante des Anschlusselementes 18, wie es als hinteres Anschlusselement 31 oder an beliebiger Stelle verwendet werden kann.

Das hintere Anschlusselement 31 beinhaltet den ersten Bereich 18.1 der, wie bereits in mehreren Varianten erläutert, direkt in die Zwischenschicht 13 eingebettet ist. Das hintere Anschlusselement 31 dient in dieser Ausführung nicht zum Anschliessen weiterer Elemente, sondern es schliesst die Leichtglasplatte 10 ab. Es dient in dieser Ausführung als Verstärkungszone, welches beispielsweise Kraft zu angrenzenden oberen oder unteren Anschlusselementen 32, 33 übertragen kann.

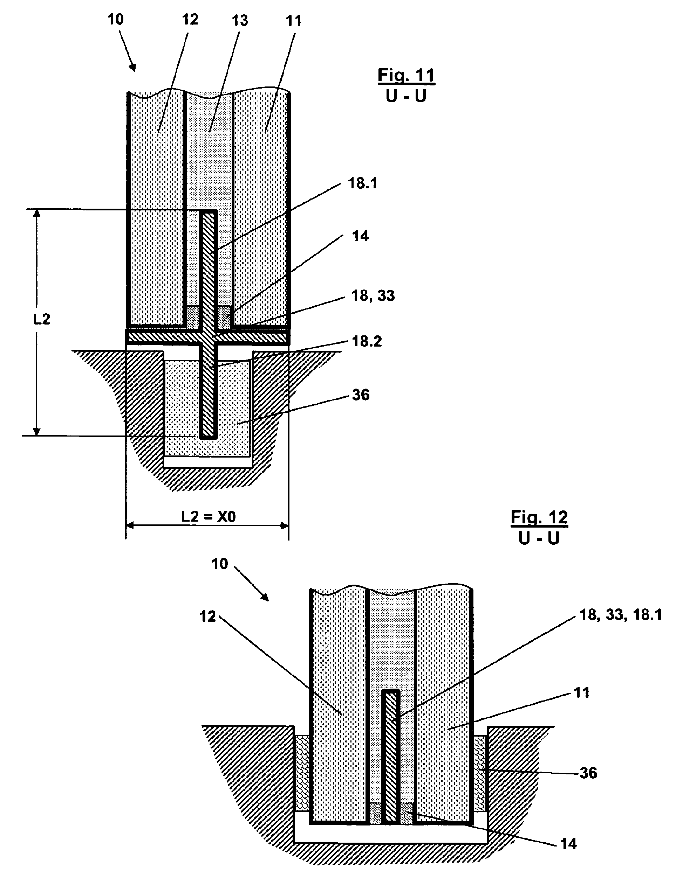

Fig. 11 zeigt, in einer Schnittdarstellung U-U, eine mögliche Ausführungsvariante des Anschlusselementes 18 in einer Verwendung als unteres Anschlusselement 33, wie es beispielsweise zur gleitenden Führung einer Aufzugstüre geeignet ist. Das Anschlusselement 33 bildet ein im Wesentlichen kreuzähnliches symmetrisches Profil, wobei eine kurze Länge L1 des kreuzähnlichen Profils einer Gesamtdicke S der Leichtglasplatte 10 entspricht und eine lange Länge L2 des kreuzähnliche Profils einer 1.5 bis 3 fachen Gesamtdicke S der Leichtglasplatte 10 entspricht. Der erste Bereich 18.1 des Anschlusselements 33 ist, wie bereits in mehreren Varianten erläutert, in die Zwischenschicht 13 eingebettet. Der Kreuzbereich deckt die Leichtglasplatte 10 über deren gesamte Dicke und schützt sie dadurch vor Beschädigungen. Der weitere Bereich 18.2 ist mit einem Gleit-Führungsbelag 36, beispielsweise einem Filzgleiter oder einem Kunststoffgleiter, versehen. Die Leichtglasplatte 10 ist nun gleitend führbar.

Auch diese Grundform des Anschlusselementes 31 ist für alle Randbereiche der Leichtglasplatte 10 im Bedarfsfalle verwendbar.

Fig. 12 zeigt eine andere mögliche Ausführungsvariante eines unteren Anschlusselementes 33, wie es ebenfalls zur gleitenden Führung der Aufzugstüre geeignet ist. Diese Ausführungsvariante basiert auf den in Fig. 10 erläuterten Ausgestaltungen. Hier ist nun zusätzlich, zum Zwecke des Führens der Leichtglasplatte 10, der Gleit-Führungsbelag 36 direkt auf der Glasplatte 11, beziehungsweise der Glasplatte 12 befestigt, vorzugsweise geklebt.

Die in den Fig. 4 bis 12 gezeigten Anschlusselemente 18 sind aus festen Werkstoffen hergestellt. Vorzugsweise werden metallische Werkstoffe, beispielsweise nichtrostendes Stahlblech, Aluminium oder auch Messing verwendet. Auch Kunststoffe sind möglich. Die in den Figuren 6, 7, 8, 9 und 11 dargestellten Anschlusselemente werden vorteilhafterweise als gezogenes oder gepresstes Profil hergestellt, während die übrigen Anschlusselemente vorteilhafterweise aus Flachmaterial hergestellt, beispielsweise gebogen und gestanzt werden

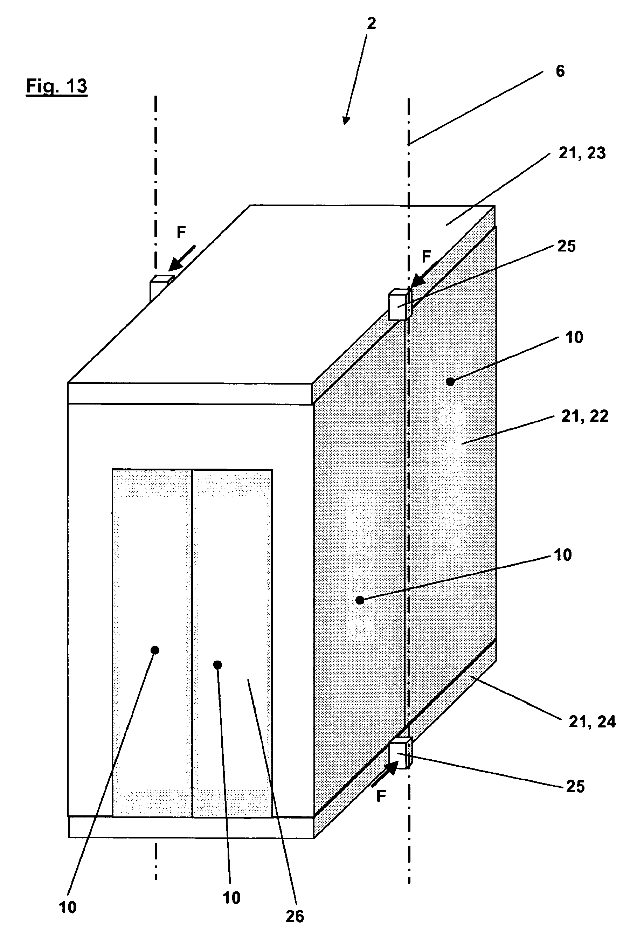

Fig. 13 zeigt eine Aufzugkabine 2, wie sie im Aufzug gemäss Fig. 1 verwendbar ist. Die Kabine 2 ist einseitig mit zwei Kabinentüren 26 versehen. Bei der dargestellten Kabinentüre handelt es sich um eine zentralöffnende Kabinentüre, bei der sich zwei Türen zum Schliessen gegeneinander bewegen, bis sie sich in der gezeigten mittleren Position mit ihren vorderen Bereichen annähern oder treffen. Zum Öffnen werden die Kabinentüren entsprechend voneinander weggeschoben. Auch andere ein- oder mehrflügelige Türsysteme sind möglich.

Die Kabine 2 wird im Weiteren von Kabinenwänden 21 umschlossen. Eine erste Kabinenwand 21 ist als Kabinenboden 24 ausgeführt. An den Kabinenboden 24 schliessen seitliche Kabinenwände 22 an, welche den Kabinenraum seitlich begrenzen. Die Kabine wird nach oben von einer Kabinendecke 23 begrenzt. Die Kabine ist mit Führungsmitteln 25 versehen, welche die Kabine 2 der Führungsschiene 6 entlang führt.

Im dargestellten Beispiel sind die beiden Türen der Kabinentüre 26 aus jeweils einer Leichtglasplatte 10 hergestellt und die seitlichen Kabinenwände 22 sind aus mehreren Leichtglasplatten 10 zusammengestellt. Die Leichtglasplatten 10 sind entsprechend den Ausführungsbeispielen aus den Figuren 4 bis 12 ausgeführt. Die Leichtglasplatten 10 sind schubfest. Das bedeutet, dass Schubkräfte F, welche beispielsweise durch exzentrische Beladung der Kabine 2 resultieren können, und welche ein entsprechendes Schubkräftepaar F bewirken, im Wesentlichen durch die Leichtglasplatten 10 übertragen werden können.

Eine derart gebaute Kabine 2 ist im Vergleich zu einer herkömmlichen Glaskabine leicht, da die verwendete Zwischenschicht 13 der Leichtglasplatten 10 lediglich etwa 50% des Gewichtes eines entsprechenden Glasvolumens hat und da auf schwere und aufwändige Rahmenkonstruktionen verzichtet werden kann. Auch die Kabinentüren 26 selbst sind vergleichsweise leicht, wodurch Bewegungsenergie minimiert, beziehungsweise Schliessgeschwindigkeit optimiert werden kann.

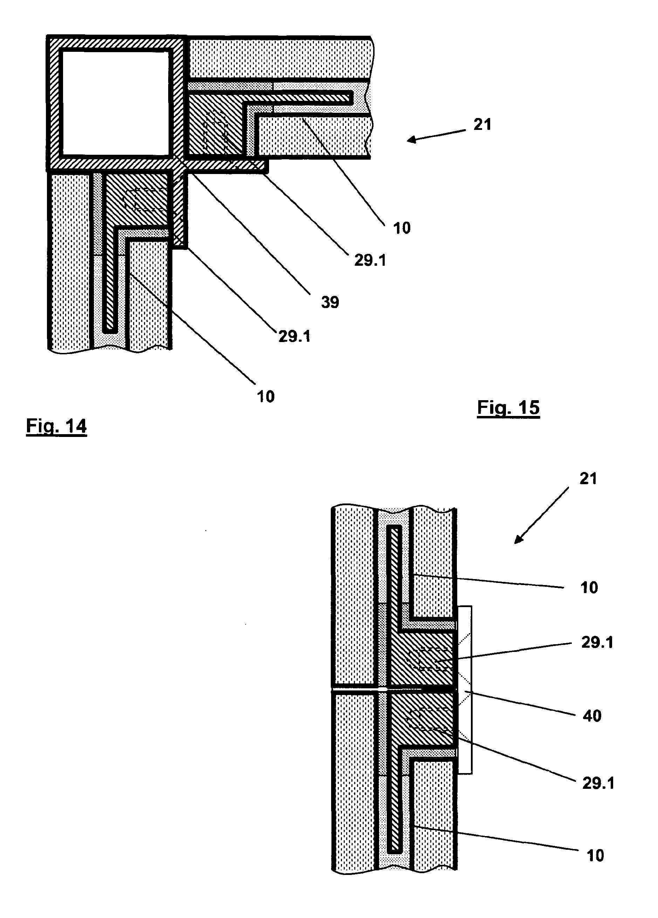

Figuren 14 und 15 zeigen Beispiele zum Verbinden von Leichtglasplatten 10 zu Kabinenwänden 21. Die verwendeten Leichtglasplatten 10 sind mit Anschlusselementen 18 ähnlich der Ausführung von Fig. 6 versehen. Anstelle des stirnseitigen Anschlussgewindes 29 sind seitliche Gewinde 29.1 im Kopfteil des Anschlusselementes18 vorgesehen. In Fig. 14 werden zwei Leichtglasplatten 10 mittels Eckverbinder 39 zu einer Kabinenecke zusammengefügt und in Fig. 15 sind zwei Leichtglasplatten 10 mittels Flachverbinder 40 zu einer Kabinenwand 21 zusammengefügt. Mittels derartiger Verbindungsmitteln kann eine Kabine 2 bedarfsgerecht zusammengestellt werden.

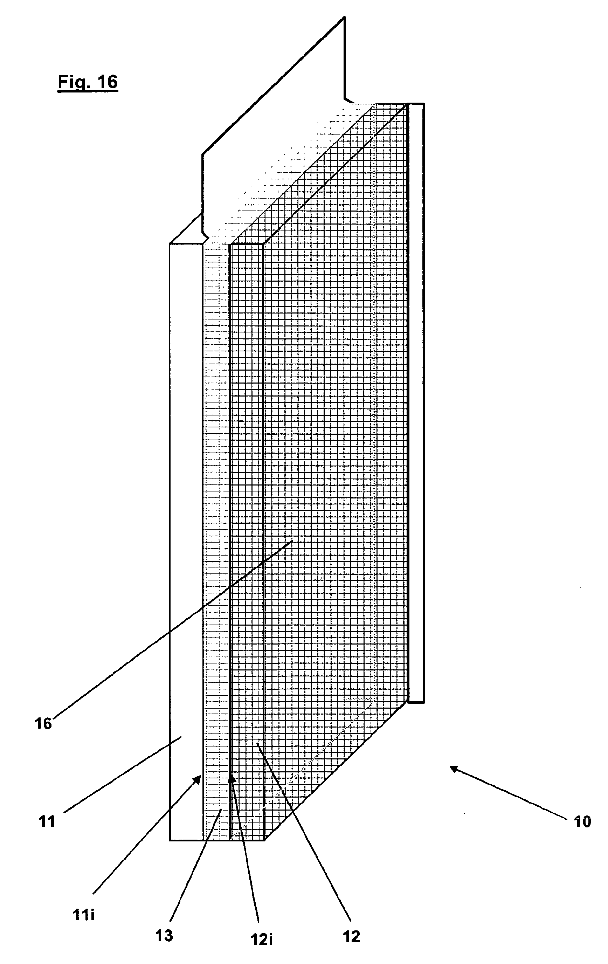

Fig. 16 zeigt eine Leichtglasplatte 10, welche als Aufzugstüre 26 verwendbar ist. Die Leichtglasplatte 10 ist wiederum, wie in den vorgängigen Figuren beschrieben, aufgebaut. Sie beinhaltet im Speziellen ein Bild, beziehungsweise eine Beschriftung 16, welche in die Zwischenschicht 13 eingelegt ist. Die Beschriftung 16 ist dauerhaft eingebracht. In Anlehnung an dieses Beispiel können, bedarfsweise ergänzend oder anstelle der Beschriftung 16, Objekte in die Zwischenschicht 13 eingebracht oder auf Innenseiten 11 i, 12i der beiden Glasplatten 11, 12 aufgebracht werden. Derartige Objekte können Siebdrucke oder Oberflächenätzungen sein, welche an den Innenflächen 11 i, 12i der Glasplatten 11, 12 aufgebracht oder vorgenommen werden. Werden derartige Objekte auf beide Innenflächen aufgebracht, können dreidimensionale Effekte erzeugt werden. Auch Objekte wie Bildskulpturen, Leuchtschriften oder Luftblasen können in die Zwischenschicht 13 eingelagert werden.

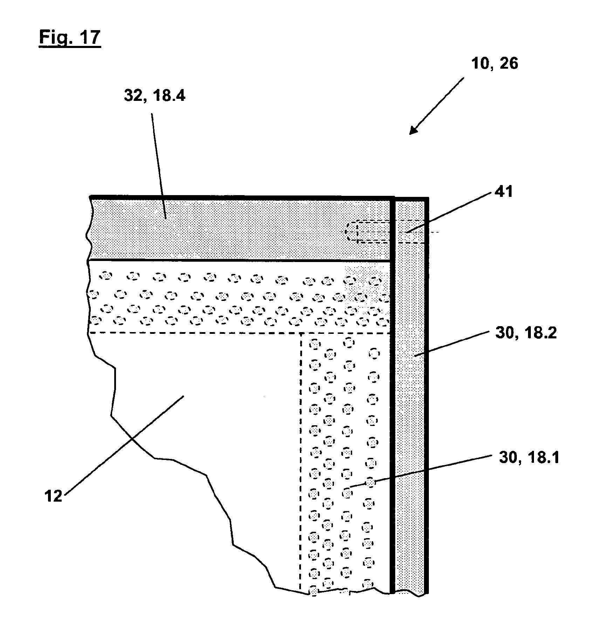

Fig. 17 zeigt beispielhaft einen Eckausschnitt der Leichtglasplatte 10, wie er für eine Aufzugstüre 26 verwendet werden kann. Die Leichtglasplatte 10 entspricht, betreffend das obere Anschlusselement 32, der Ausführung ähnlich wie in Fig. 6 beschrieben. Das gezeigte vordere Anschlusselement 30 entspricht einer Ausführung, entsprechend dem Beispiel von Fig. 7, wobei der erste Bereich 18.1 des vorderen Anschlusselementes 30 im Bereich des oberen Anschlusselementes 32 weggeschnitten ist und lediglich der weitere Bereich 18.2 des vorderen Anschlusselements 30 nach oben geführt ist.

Dieser nach oben geführte weitere Bereich 18.2 des vorderen Anschlusselementes 30 ist stirnseitig mit dem Kopfteil 18.4 des oberen Anschlusselements 32 verbunden, vorzugsweise unter Benutzung eines stirnseitigen Gewindes 41 mit zugehöriger Senkkopfschraube. Die kraftschlüssige Verbindung von zwei Anschlusselementen 30, 32 im Eckbereich entlastet die eigentlichen Glasplatten, da Kräfte direkt über die Anschlusselemente 30, 32 geleitet werden.

Bei Kenntnis der vorliegenden Erfindung kann der Aufzugsfachmann die gesetzten Formen und Anordnungen verändern. Die Formen des Anschlusselementes 18 sind bedarfsgerecht bestimmbar. Beispielsweise kann die gezeigte Aufzugsplatte 10 auch als Kabinendecke oder Kabinenboden verwendet sein. Die Glasplatten können auch eine Form, wie beispielsweise eine Rundformung für den Eckbereich der Kabine, aufweisen. Die in den Fig. 4 und 5 gezeigten Ausführungen des ersten Bereiches 18.1, wie auch die Beispiele zur Gestaltung der Glasplatten 11, 12 und der Zwischenschicht 13, sind zu den übrigen Anwendungsbeispielen kombinierbar. Auch können die anhand der Beispiele für die Aufzugstüre gezeigten Lösungen sinngemäss auch für Kabinenwandkonstruktionen, oder umgekehrt, verwendet werden.

Die Glassstruktur kann auch geformt sei. Dadurch kann sich beispielsweise eine Glasstruktur über eine Ecke der Kabine erstrecken.

## Patentansprüche

1. Aufzugsanlage mit einer Kabine (2), mit mindestens einer Kabinentüre und mit Schachttüren, wobei die Kabine, die Kabinentüre oder die Schachttüre eine Glasstruktur beinhaltet, welche Glasstruktur ihrerseits
- eine erste Glasplatte (11), mit einer ersten Glasplattendicke (X1),
- eine zweite Glasplatte (12), mit einer zweiten Glasplattendicke (X2),
- eine Zwischenschicht (13), welche die erste und die zweite Glassplatte miteinander verbindet und
- mindestens ein Anschlusselement (18), beinhaltet
wobei die Glasstruktur eine Leichtglasplatte (10) ist bei der die Zwischenschicht (13) einen durch einen Abstand (X3) der beiden Glasplatten (11, 12) bestimmten Zwischenraum einstückig ausfüllt, und
eine durch den Abstand (X3) bestimmte Dicke der Zwischenschicht (13) grösser oder zumindest gleich einer halben Glasplattendicke (X1, X2) der ersten oder der zweiten Glasplatte (11, 12) ist, und
das Anschlusselement (18) in einem Randbereich der Leichtglasplatte (10) in die Zwischenschicht (13) eingebettet ist und die Zwischenschicht (13) sich auf einen Raum zwischen dem Anschlusselement (18) und den Glasplatten (11, 12) erstreckt.

2. Aufzugsanlage nach Anspruch 1, wobei
das Anschlusselement (18) aus metallischem Werkstoff hergestellt ist und das Anschlusselement (18) einen ersten Bereich (18.1) aufweist, welcher in die Zwischenschicht (13) eingebettet ist,
das Anschlusselement (18) einen weiteren Bereich (18.2) aufweist, welcher zum Anschluss an ein angrenzendes Bauteil vorgesehen ist, und
der erste Bereich (18.1) eine Struktur aufweist, welche eine Kraftverbindung vom Anschlusselement (18) zur Zwischenschicht (13) gewährleistet.

3. Aufzugsanlage nach einem der vorgängigen Ansprüche, wobei die erste und die zweite Glasplatte (11, 12) im Randbereich mit einem Dichtmaterial (14) versehen sind, welches Dichtmaterial (14) ein Eindringen von Feuchtigkeit in die Zwischenschicht (13) verhindert.

4. Aufzugsanlage nach einem der vorgängigen Ansprüche, wobei
die Zwischenschicht (13) mit einer Einlage oder mit einer Schicht versehen ist, welche Einlage oder welche Schicht einen vorbestimmten optisch sichtbaren Effekt ergibt
und /oder
die erste und/oder die zweite Glasplatte (11, 12) in einem Grenzbereich zur Zwischenschicht (13) mit einer Beschichtung (16) versehen ist, welche Beschichtung den vorbestimmten optisch sichtbaren Effekt ergibt.

5. Aufzugsanlage nach einem der vorgängigen Ansprüche, wobei
die zweite Glasplatte (12) zur ersten Glassplatte (11) zumindest in einem Randbereiche zurückgesetzt angeordnet ist und das Anschlusselement (18) einen Schenkel (18.3), entsprechend dem ersten Bereich (18.1), beinhaltet, welcher in die Zwischenschicht (13) hineinragt und das Anschlusselement (18) einen Kopfteil (18.4) beinhaltet, welcher einen Platz, der durch die zurückgesetzte zweite Glasplatte (12) entsteht im Wesentlichen ausfüllt und der Kopfteil (18.4) Elemente (19) zum Anschliessen von weiteren Teilen beinhaltet.

6. Aufzugsanlage nach einem der vorgängigen Ansprüche, wobei
die Kabine (2) mindestens eine Kabinenwand (21) beinhaltet, welche im Wesentlichen vollflächig oder in einem Teilbereich aus der Leichtglasplatte (10) besteht, und
die Kabinenwand (21) eine seitliche Kabinenabgrenzung (22), eine obere Kabinendecke (23) oder einen unteren Kabinenboden (24) bildet.

7. Aufzugsanlage nach Anspruch 6, wobei
die Leichtglasplatte (10) eine tragende Struktur einer Aufzugskabine (2) bildet und Kräfte über die Leichtglasplatte (10) vom Kabinenboden (24) in obere Kabinenführungsteile (25) geleitet werden.

8. Aufzugsanlage nach einem der vorgängigen Ansprüche wobei
die Kabinentüre (26) und / oder die Schachttüre (27) eine Leichtglasplatte (10) beinhaltet, welche ein oberes Anschlusselement (18, 32) beinhaltet, und der erste Bereich (18.1) des oberen Anschlusselements (18, 32) in die Zwischenschicht (13) der Leichtglasplatte (10) eingebettet ist und der weitere Bereich (18.2) des oberen Anschlusselements (18, 32) mit Türelementen (28) versehen ist.

9. Aufzugsanlage nach Anspruch 8, wobei
die Leichtglasplatte (10) der Kabinentüre (26) und / oder der Schachttüre (27) ein vorderes Anschlusselement (18, 30) beinhaltet, und der erste Bereich (18.1) des vorderen Anschlusselements (18, 30) in die Zwischenschicht (13) der Leichtglasplatte (10) eingebettet ist und der weitere Bereich (18.2) des vorderen Anschlusselements (18, 30) die Leichtglasplatte (10) über eine Dicke (S) der Leichtglasplatte (10) abschliesst oder der weitere Bereich (18.2) die Leichtglasplatte (10) über die Dicke (S) umfasst, wobei das vordere Anschlusselement (30) vorzugsweise einen Sensor (34) zur Erfassung eines Gegenstandes oder einer Person im Bereich einer vorderen Kante der Aufzugstüre beinhaltet, und dieser Sensor (34) eine Kraft misst oder induktiv, kapazitiv oder mittels Schall- oder Lichtwellen den Gegenstand detektiert.

10. Aufzugsanlage nach Anspruch 9, wobei
das vordere Anschlusselement (30) mit runder Kante versehen ist um Verletzungen von berührten Gegenständen und Personen vorzubeugen, und/oder das vordere Anschlusselement (30) mit Warnelementen (35), wie Blinkleuchten versehen ist um einen Benutzer bei schliessender Türe zu warnen.

11. Aufzugsanlage nach einem der Ansprüche 8 bis 10, wobei
die Leichtglasplatte (10) der Kabinentüre (26) und / oder der Schachttüre (27) ein hinteres Anschlusselement (18, 31) beinhaltet, und der erste Bereich (18.1) des hinteren Anschlusselements (18, 31) in die Zwischenschicht (13) der Leichtglasplatte (10) eingebettet ist und der weitere Bereich (18.2) des hinteren Anschlusselements (18, 31) mindestens einseitig die Dicke (S) der Glasplatte (12) überragt um zusammen mit einem benachbarten Türblatt oder einem benachbarten Türrahmen (37) eine Überdeckung zu definieren, welche einen Spalt (38) zwischen der Leichtglasplatte (10) und dem benachbarten Türblatt oder dem benachbarten Türrahmen (37) zumindest optisch schliesst.

12. Aufzugsanlage nach einem der Ansprüche 9 bis 11, wobei
das vordere und/oder das hintere Anschlusselement (30, 31) kraftschlüssig mit dem oberen Anschlusselement (32) verbunden sind.

## Claims

1. Lift installation with a car (2), having at least one car door and having shaft doors, wherein the car, the car doors or the shaft doors include a glass structure, which glass structure for its part includes
- a first glass plate (11) with a first glass plate thickness (X1),
- a second glass plate (12) with a second glass plate thickness (X2),
- an intermediate layer (13), which connects the first and the second glass plates to one another, and
- at least one connecting element (18),
wherein the glass structure is a lightweight glass plate (10) in which the intermediate layer (13) integrally fills out an intermediate space defined by a spacing (X3) between the two glass plates (11, 12), and
a thickness of the intermediate layer (13) defined by the spacing (X3) is greater than or at least equal to half a glass plate thickness (X1, X2) of the first or of the second glass plate (11, 12), and
the connecting element (18) is embedded into the intermediate layer (13) in a marginal region of the lightweight glass plate (10), and the intermediate layer (13) extends onto a space between the connecting element (18) and the glass plates (11, 12).

2. Lift installation according to Claim 1, wherein
the connecting element (18) is produced from a metallic material and the connecting element (18) has a first region (18.1) which is embedded into the intermediate layer (13),
the connecting element (18) has a further region (18.2), which is intended for connection to an adjoining component, and
the first region (18.1) has a structure which ensures a force connection from the connecting element (18) to the intermediate layer (13).

3. Lift installation according to either of the preceding claims, wherein
the first and the second glass plates (11, 12) are provided with a sealing material (14) in the marginal region, which sealing material (14) prevents the penetration of moisture into the intermediate layer (13).

4. Lift installation according to one of the preceding claims, wherein
the intermediate layer (13) is provided with an inlay or with a layer, which inlay or which layer generates a predetermined optically visible effect, and/or
the first and/or the second glass plate (11, 12) is provided with a coating (16) in a boundary region with the intermediate layer (13), which coating generates the predetermined optically visible effect.

5. Lift installation according to one of the preceding claims, wherein the second glass plate (12) is arranged set back in relation to the first glass plate (11) at least in a marginal region, the connecting element (18) includes a limb (18.3), corresponding to the first region (18.1), which protrudes into the intermediate layer (13), the connecting element (18) includes a head part (18.4), which substantially fills a space formed by the set back second glass plate (12), and the head part (18.4) includes elements (19) for the connection of further parts.

6. Lift installation according to one of the preceding claims, wherein the car (2) includes at least one car wall (21), which consists substantially over its entire area or in a partial region of the lightweight glass plate (10),
and
the car wall (21) forms a lateral car delimitation (22), a top car ceiling (23) or a bottom car floor (24).

7. Lift installation according to Claim 6, wherein
the lightweight glass plate (10) forms a load-bearing structure of a lift car (2), and forces are conducted via the lightweight glass plate (10) from the car floor (24) into upper car guide parts (25).

8. Lift installation according to one of the preceding claims, wherein
the car door (26) and/or the shaft door (27) includes a lightweight glass plate (10) which includes a top connecting element (18, 32), the first region (18.1) of the top connecting element (18, 32) is embedded into the intermediate layer (13) of the lightweight glass plate (10), and the further region (18.2) of the top connecting element (18, 32) is provided with door elements (28).

9. Lift installation according to Claim 8, wherein
the lightweight glass plate (10) of the car door (26) and/or of the shaft door (27) includes a front connecting element (18, 30), the first region (18.1) of the front connecting element (18, 30) is embedded into the intermediate layer (13) of the lightweight glass plate (10), and the further region (18.2) of the front connecting element (18, 30) terminates the lightweight glass plate (10) over a thickness (S) of the lightweight glass plate (10) or the further region (18.2) encompasses the lightweight glass plate (10) over the thickness (S), wherein the front connecting element (30) preferably includes a sensor (34) for detecting an object or a person in the region of a front edge of the lift door, and this sensor (34) measures a force or detects the object inductively, capacitively or by means of sound or light waves.

10. Lift installation according to Claim 9, wherein
the front connecting element (30) is provided with a round edge in order to prevent harm to contacted objects and people, and/or
the front connecting element (30) is provided with warning elements (35), such as flashing lights, in order to warn a user when the door is closing.

11. Lift installation according to one of Claims 8 to 10, wherein
the lightweight glass plate (10) of the car door (26) and/or of the shaft door (27) includes a rear connecting element (18, 31), the first region (18.1) of the rear connecting element (18, 31) is embedded into the intermediate layer (13) of the lightweight glass plate (10), and the further region (18.2) of the rear connecting element (18, 31) protrudes beyond the thickness (S) of the glass plate (12) at least on one side in order to define, together with an adjacent door leaf or an adjacent door frame (37), a cover which at least optically closes a gap (38) between the lightweight glass plate (10) and the adjacent door leaf or the adjacent door frame (37).

12. Lift installation according to one of Claims 9 to 11, wherein
the front and/or the rear connecting element (30, 31) are connected to the top connecting element (32) in a force-fitting manner.

## Revendications

1. Installation d'ascenseur comprenant une cabine (2), comprenant au moins une porte de cabine et comprenant des portes palières, dans laquelle la cabine, la porte de cabine ou la porte palière comporte une structure en verre, laquelle structure en verre comporte pour sa part
- une première plaque en verre (11) présentant une première épaisseur de plaque en verre (X1),
- une deuxième plaque en verre (12) présentant une deuxième épaisseur de plaque en verre (X2),
- une couche intermédiaire (13) qui relie l'une à l'autre la première et la deuxième plaque en verre et
- au moins un élément de raccordement (18),
dans laquelle la structure en verre est une plaque en verre léger (10) dans laquelle la couche intermédiaire (13) remplit d'un seul tenant un espace intermédiaire défini par un écartement (X3) des deux plaques en verre (11, 12) et
une épaisseur, définie par l'écartement (X3), de la couche intermédiaire (13) est supérieure ou au moins égale à une demi-épaisseur de plaque en verre (X1, X2) de la première ou de la deuxième plaque en verre (11, 12) et
l'élément de raccordement (18) est encastré dans la couche intermédiaire (13) dans une zone de bord de la plaque en verre léger (10) et la couche intermédiaire (13) s'étend sur un espace entre l'élément de raccordement (18) et les plaques en verre (11, 12).

2. Installation d'ascenseur selon la revendication 1, dans laquelle
l'élément de raccordement (18) est fabriqué en matériau métallique et l'élément de raccordement (18) comprend une première zone (18.1) qui est encastrée dans la couche intermédiaire (13),
l'élément de raccordement (18) comprend une zone supplémentaire (18.2) qui est prévue pour le raccordement à une partie structurale adjacente et la première zone (18.1) comprend une structure qui assure une liaison par force de l'élément de raccordement (18) à la couche intermédiaire (13).

3. Installation d'ascenseur selon l'une quelconque des revendications précédentes, dans laquelle
la première et la deuxième plaque en verre (11, 12) sont pourvues d'un matériau d'étanchéité (14) dans la zone de bord, lequel matériau d'étanchéité (14) empêche une infiltration d'humidité dans la couche intermédiaire (13).

4. Installation d'ascenseur selon l'une quelconque des revendications précédentes, dans laquelle
la couche intermédiaire (13) est pourvue d'un insert ou d'une couche, lequel insert ou laquelle couche produit un effet optiquement visible prédéfini et/ou
la première et/ou la deuxième plaque en verre (11, 12) est pourvue d'un revêtement (16) dans une zone limite par rapport à la couche intermédiaire (13), lequel revêtement produit l'effet optiquement visible prédéfini.

5. Installation d'ascenseur selon l'une quelconque des revendications précédentes, dans laquelle
la deuxième plaque en verre (12) est disposée en retrait par rapport à la première plaque en verre (11) au moins dans une zone de bord et l'élément de raccordement (18) comporte une branche (18.3), correspondant à la première zone (18.1), laquelle branche pénètre dans la couche intermédiaire (13) et l'élément de raccordement (18) comporte une partie de tête (18.4) qui remplit essentiellement un espace qui résulte de la deuxième plaque en verre (12) en retrait et la partie de tête (18.4) comporte des éléments (19) pour le raccordement de parties supplémentaires.

6. Installation d'ascenseur selon l'une quelconque des revendications précédentes, dans laquelle
la cabine (2) comporte au moins une paroi de cabine (21) qui est constituée, essentiellement sur toute sa surface ou dans une zone partielle, de la plaque en verre léger (10)
et
la paroi de cabine (21) forme une délimitation latérale de cabine (22), un plafond supérieur de cabine (23) ou un plancher inférieur de cabine (24).

7. Installation d'ascenseur selon la revendication 6, dans laquelle
la plaque en verre léger (10) forme une structure porteuse d'une cabine d'ascenseur (2) et des forces sont guidées, par le biais de la plaque en verre léger (10), à partir du plancher de cabine (24) dans des parties supérieures de guidage de cabine (25).

8. Installation d'ascenseur selon l'une quelconque des revendications précédentes, dans laquelle
la porte de cabine (26) et/ou la porte palière (27) comporte(nt) une plaque en verre léger (10) qui comporte un élément de raccordement supérieur (18, 32) et la première zone (18.1) de l'élément de raccordement supérieur (18, 32) est encastrée dans la couche intermédiaire (13) de la plaque en verre léger (10) et la zone supplémentaire (18.2) de l'élément de raccordement supérieur (18, 32) est pourvue d'éléments de porte (28).

9. Installation d'ascenseur selon la revendication 8, dans laquelle
la plaque en verre léger (10) de la porte de cabine (26) et/ou de la porte palière (27) comporte un élément de raccordement avant (18, 30) et la première zone (18.1) de l'élément de raccordement avant (18, 30) est encastrée dans la couche intermédiaire (13) de la plaque en verre léger (10) et la zone supplémentaire (18.2) de l'élément de raccordement avant (18, 30) ferme la plaque en verre léger (10) sur une épaisseur (S) de la plaque en verre léger (10) ou la zone supplémentaire (18.2) entoure la plaque en verre léger (10) sur l'épaisseur (S), dans laquelle l'élément de raccordement avant (30) comporte de préférence un capteur (34) pour la détection d'un objet ou d'une personne dans la zone d'une arête avant de la porte d'ascenseur et ce capteur (34) mesure une force ou détecte l'objet par voie inductive, capacitive ou au moyen d'ondes sonores ou lumineuses.

10. Installation d'ascenseur selon la revendication 9, dans laquelle
l'élément de raccordement avant (30) est pourvu d'arêtes arrondies afin de parer à des endommagements d'objets en contact ou à des blessures de personnes en contact et/ou l'élément de raccordement avant (30) est pourvu d'éléments d'avertissamant (35), tels que des voyants clignotants, afin d'avertir un utilisateur en cas de fermeture de la porte.

11. Installation d'ascenseur selon l'une quelconque des revendications 8 à 10, dans laquelle
la plaque en verre léger (10) de la porte de cabine (26) et/ou de la porte palière (27) comporte un élément de raccordement arrière (18, 31) et la première zone (18.1) de l'élément de raccordement arrière (18, 31) est encastrée dans la couche intermédiaire (13) de la plaque en verre léger (10) et la zone supplémentaire (18.2) de l'élément de raccordement arrière (18, 31) dépasse au moins d'un côté au-delà de l'épaisseur (S) de la plaque en verre (12) afin de définir, conjointement avec un panneau de porte adjacent ou un cadre de porte adjacent (37), un recouvrement qui ferme au moins optiquement un interstice (38) entre la plaque en verre léger (10) et le panneau de porte adjacent ou le cadre de porte adjacent (37).

12. Installation d'ascenseur selon l'une quelconque des revendications 9 à 11, dans laquelle
l'élément de raccordement avant et/ou l'élément de raccordement arrière (30, 31) est/sont relié(s) par force à l'élément de raccordement supérieur (32).
